# EUROPEAN PATENT APPLICATION

(11) **EP 2 819 376 A1**
(43) Date of publication of application: **31.12.2014**
(21) Application number: 12871930.9
(22) Date of filing: 29.06.2012
(51) Int. Cl.: H04L 29/08

(54) **DATA SYNCHRONIZATION METHOD AND DEVICE**

(30) Priority: 20.03.2012 CN 201210074573
(71) Applicant: ZTE Corporation, Shenzhen, Guangdong 518057 (CN)
(72) Inventor: ZHANG, Wei, Shenzhen Guangdong 518057 (CN)
(74) Representative: Chimini, Francesco
(86) International application number: PCT/CN2012/077862
(87) International publication number: WO 2013/139098

(57) **Abstract**

Provided are a method and device for synchronizing data. The method comprises: a cloud server receives a data synchronization request sent by a mobile terminal, wherein the synchronization request carries an identifier of the mobile terminal, last time that the data is synchronized by the mobile terminal, and a synchronization account for synchronizing data between the mobile terminal and the cloud server; the cloud server detects that record operation time of data to be synchronized is greater than the last time that the data was synchronized by the mobile terminal, wherein the data to be synchronized is data corresponding to the identifier in the synchronization account on the cloud server; and the data to be synchronized are synchronized between the cloud server and the mobile terminal. The present invention solves the problems that traffic transmitted during data synchronization is increased and resource consumption on the cloud is also increased, thereby reducing the transmitted traffic caused by data synchronization, reducing the resource consumption of the cloud server, and facilitating the satisfaction of diversified requirements of a user.

## Description

### Technical Field

The present invention relates to the field of communications, in particular to a method and device for synchronizing data.

### Background

In the present invention, synchronization based on the cloud refers to that a mobile terminal logs on the cloud via a user account, and then the mobile terminal and the cloud perform bidirectional data synchronization. The cloud is generally a distributed system, and in practical usage, the following phenomenon often appears: a plurality of mobile terminals simultaneously use the same logon account or different logon accounts to perform synchronization, one of the accounts has not been used for a long time but the account is not deregistered by the cloud. Because of the existence of the above-mentioned phenomenon, there is too much synchronous control information in the prior art, thereby causing large traffic. In addition, synchronization in the related art only supports that the contents synchronized on a plurality of mobile terminals corresponding to the same account are identical, thereby being unable to satisfy diversified requirements of a user. For example, account Vivian reads a Java book on mobile phone A, and the user wants to synchronize the bookmark of the Java book between the mobile phone A and the cloud, whereas account Vivian reads a C++ book on mobile phone B, and the user wants to synchronize the bookmark of the C++ book between mobile phone B and the cloud; that is to say, the user wants account Vivian to synchronize data corresponding to each mobile phone on mobile phones A and B respectively, instead of sharing the data of the Java book and the C++ book on mobile phones A and B; however, in the prior art, once synchronization is initiated, bookmarks of the two books, i.e., the C++ book and the Java book, will be received on both mobile phone A and mobile phone B, that is, the contents synchronized by mobile phones A and B in the same account are identical; therefore, the diversified requirements of the user cannot be satisfied. Meanwhile, because identical data synchronization is performed among the plurality of mobile terminals in the same account, traffic transmitted during data synchronization is increased and resource consumption on the cloud is also increased.

Therefore, in the above-mentioned method for synchronizing data, data synchronization among the plurality of mobile terminals in the same account leads to the problems that traffic transmitted during data synchronization is increased and resource consumption on the cloud is also increased, and at the same time cannot satisfy the diversified requirements of the user. Summary

Provided are a method and device for synchronizing data to at least solve the problems in the related art that traffic transmitted during data synchronization is increased and resource consumption on the cloud is also increased, which are caused by data synchronization among a plurality of mobile terminals in the same account.

According to one aspect of the present invention, a method for synchronizing data is provided, which comprises: a cloud server receiving a data synchronization request sent by a mobile terminal, wherein the synchronization request carries an identifier of the mobile terminal, last time that data was synchronized by the mobile terminal, and a synchronization account for synchronizing data between the mobile terminal and the cloud server; the cloud server detecting that record operation time of data to be synchronized is greater than the last time that the data was synchronized by the mobile terminal, wherein the data to be synchronized is data which is corresponding to the identifier in the synchronization account and is on the cloud server; and the cloud server synchronizing the data to be synchronized with the mobile terminal.

Preferably, the cloud server detecting that the record operation time of the data to be synchronized is greater than the last time that the data was synchronized by the mobile terminal comprises: the cloud server detecting that the record operation time of the data to be synchronized corresponding to a predetermined service is greater than the last time that the data was synchronized by the mobile terminal; and the cloud server synchronizing the data to be synchronized with the mobile terminal comprises: the cloud server sending the data to be synchronized of the predetermined service to the mobile terminal.

Preferably, the cloud server receiving the data synchronization request sent by the mobile terminal comprises: the data synchronization request sent by the mobile terminal and received by the cloud server comprising changed data of the mobile terminal and attribute information about the changed data, wherein the attribute information comprises: being shared or being exclusive.

Preferably, the cloud server synchronizing the data to be synchronized with the mobile terminal comprises: the cloud server acquiring an operation type of the changed data, and operating on the changed data according to the operation type.

Preferably, the cloud server operating on the changed data according to the operation type comprises: when the operation type is adding, the cloud server adding the changed data into the cloud server and setting the record operation time of the changed data which is added to be the time of the add operation; and when the operation type is deleting or modifying, the cloud server detecting whether a data attribute which is corresponding to the changed data and is recorded by the cloud server is shared or not, and if a detecting result is yes, then deleting or modifying the corresponding data in the cloud server and updating the record operation time of the data to be the time of the delete operation or modify operation.

Preferably, the cloud server synchronizing the data to be synchronized with the mobile terminal comprises: when the operation type is deleting or modifying, and the mobile terminal and a cloud server portal simultaneously issue a deletion or modification request for the changed data, the cloud server performing a corresponding operation on the changed data according to a priority order of the mobile terminal and the cloud server portal.

Preferably, the cloud server synchronizing the data to be synchronized with the mobile terminal comprises: when a plurality of mobile terminals simultaneously initiate synchronization on the data to be synchronized, the cloud server synchronizing the data to be synchronized with the plurality of mobile terminals in sequence.

Preferably, after the cloud server synchronizing the data to be synchronized with the mobile terminal, the above-mentioned method further comprises: when the cloud server detects that a time interval between the last time that the mobile terminal synchronizes the data with the cloud server and the current time is greater than a preset time interval, deleting all the data of the mobile terminal on the cloud server.

According to another aspect of the present invention, a device for synchronizing data is provided, which comprises: a receiving module configured to receive a data synchronization request sent by a mobile terminal, wherein the synchronization request carries an identifier of the mobile terminal, last time that the data was synchronized by the mobile terminal, and a synchronization account for synchronizing data between the mobile terminal and the cloud server; a detecting module configured to detect that the record operation time of data to be synchronized is greater than the last time that the data was synchronized by the mobile terminal, wherein the data to be synchronized is data which is corresponding to the identifier in the synchronization account and is on the cloud server; and a synchronization module configured to synchronize the data to be synchronized with the mobile terminal.

Preferably, the receiving module is further configured to receive the data synchronization request sent by the mobile terminal which comprises changed data of the mobile terminal and attribute information about the changed data, wherein the attribute information comprises: being shared or being exclusive.

Preferably, the synchronization module comprises: an acquisition unit configured to acquire an operation type of the changed data; and a first synchronization unit configured to operate on the changed data according to the operation type.

Preferably, the first synchronization unit comprises: a second synchronization unit configured to add the changed data into the cloud server and set the record operation time of the changed data which is added to be the time of the add operation when the operation type is adding; and a third synchronization unit configured to detect whether a data attribute which is corresponding to the changed data and is recorded by the cloud server is shared or not when the operation type is deleting or modifying, and if a detecting result is yes, then delete or modify the corresponding data in the cloud server and update the record operation time of the data to be the time of the delete operation or modify operation.

In the present invention, a cloud server receives a data synchronization request sent by a mobile terminal, wherein the synchronization request carries an identifier of the mobile terminal, time when the mobile terminal synchronizes data last time, and a synchronization account which synchronizes data between the mobile terminal and the cloud server, so as to ensure that the mobile terminal is a terminal in the account; the cloud server determines that the data which has changed on the cloud server is the data to be synchronized by detecting that the record operation time of the data to be synchronized is greater than the time when the mobile terminal synchronizes data last time, and at the same time the data to be synchronized is the data corresponding to the identifier of the mobile terminal in the synchronization account on the cloud server, that is, the data to be synchronized only allows the mobile terminal with the identifier corresponding thereto to synchronize the data to be synchronized, which solves the problems that traffic transmitted during data synchronization is increased and resource consumption on the cloud is also increased, which are caused by data synchronization of a plurality of mobile terminals in the same account, thereby reducing the transmitted traffic caused by data synchronization, reducing the resource consumption of the cloud server, and facilitating the satisfaction of diversified requirements of the user.

### Brief Description of the Drawings

Drawings, provided for further understanding of the present invention and forming a part of the specification, are used to explain the present invention together with embodiments of the present invention rather than to limit the present invention, wherein:
Fig. 1 is a flowchart of a method for synchronizing data according to an embodiment of the present invention;
Fig. 2 is a schematic diagram of a synchronous control data table according to an embodiment of the present invention;
Fig. 3 is a schematic diagram of a service data table according to an embodiment of the present invention;
Fig. 4 is a flowchart of another method for synchronizing data according to an embodiment of the present invention;
Fig. 5 is a schematic diagram of a contact service data table according to an embodiment of the present invention;
Fig. 6 is a flowchart for returning changed data to a mobile terminal according to an embodiment of the present invention;
Fig. 7 is a structure diagram of a device for synchronizing data according to an embodiment of the present invention;
Fig. 8 is a structure diagram of a synchronization module according to an embodiment of the present invention; and
Fig. 9 is a structure diagram of a synchronization unit according to an embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

### Embodiment 1

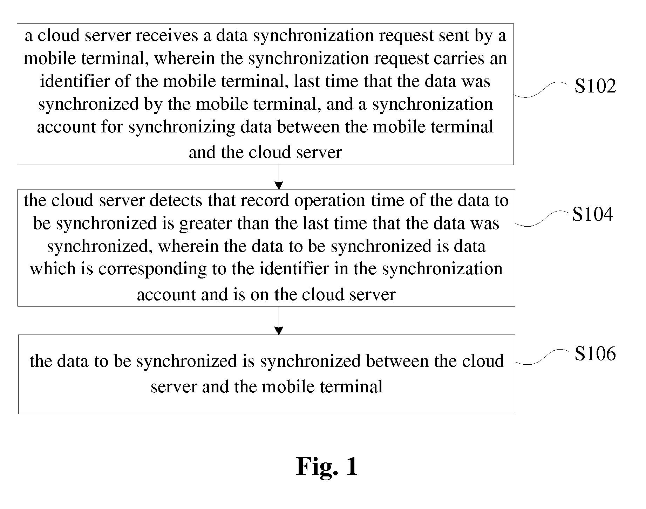

This embodiment provides a preferred method for synchronizing data. Fig. 1 is a flowchart of a method for synchronizing data according to an embodiment of the present invention. As shown in Fig. 1, the method for synchronizing data comprises step S102 to step S106.

Step S102: a cloud server receives a data synchronization request sent by a mobile terminal, wherein the synchronization request carries an identifier of the mobile terminal, last time that the data was synchronized by the mobile terminal, and a synchronization account for synchronizing data between the mobile terminal and the cloud server.

Step S104: the cloud server detects that record operation time of the data to be synchronized is greater than the last time that the data was synchronized, wherein the data to be synchronized is data which is corresponding to the identifier in the synchronization account and is on the cloud server.

Step S106: the data to be synchronized is synchronized between the cloud server and the mobile terminal.

Through the above-mentioned steps, a cloud server receives a data synchronization request sent by a mobile terminal, wherein the synchronization request carries the identifier of the mobile terminal, the last time that the data is synchronized by the mobile terminal, and the synchronization account for synchronizing data between the mobile terminal and the cloud server, so as to ensure that the mobile terminal is a terminal in the account; the cloud server determines that the changed data on the cloud server is the data to be synchronized by detecting that the record operation time of the data to be synchronized is greater than the last time that the data is synchronized by the mobile phone, and at the same time the data to be synchronized is data corresponding to the identifier of the mobile terminal in the synchronization account on the cloud server, that is, the data to be synchronized only can be synchronized by the mobile terminal with the identifier which is corresponding to the data to be synchronized, which solves the problems that traffic transmitted during data synchronization is increased and resource consumption on the cloud is also increased, which are caused by data synchronization of a plurality of mobile terminals in the same account, thereby reducing the transmitted traffic caused by data synchronization, reducing the resource consumption of the cloud server, and facilitating the satisfaction of diversified requirements of a user.

In order to accurately send the data to be synchronized to a mobile terminal, in this preferred embodiment, a method that a cloud server detects that record operation time of the data to be synchronized is greater than last time that the data is synchronized by the mobile terminal is provided. For example, the cloud server detects that the record operation time of the data to be synchronized corresponding to a predetermined service is greater than the last time that the data was synchronized by the mobile terminal, so as to distinguish the changed data on the cloud server with respect to the mobile terminal, and sends the data to be synchronized of the predetermined service to the mobile terminal, so as to ensure that the data to be synchronized which is sent to the mobile terminal is the data on the cloud server which has changed with respect to the mobile terminal.

In order to realize bidirectional data synchronization between a cloud server and a mobile terminal, in this embodiment, a preferred method for synchronizing changed data on a mobile terminal side to a cloud server is provided. For example, a data synchronization request, which is received by the cloud server and sent by the mobile terminal, comprises changed data of the mobile terminal and attribute information about the changed data, wherein the attribute information comprises: being shared or being exclusive. In this preferred embodiment, the mobile terminal sends the changed data thereof to the cloud server via the data synchronization request, and carries the attribute information about the changed data, for example, whether the changed data is shared data or not, that is, whether the changed data can be synchronized by all the mobile terminals in the above-mentioned synchronization account, so as to realize that the synchronization data can be synchronized by some of the mobile terminals in the synchronization account.

Every time a device synchronizes with the cloud, only the changed data content of the device and/or the cloud side is synchronized, and a synchronization request message sent by the device every time carries the following contents: a device ID, an account, a password, an synId, changed data on the device side, and a data operation type, wherein when the changed data is added data, the above-mentioned synchronization request message also carries an identifier "share" so as to identify whether it is allowed to share the added data or not, and if it is allowed to share the added data, then the cloud server may by default share the data with all the devices in the account, and if it is not allowed to share the added data, then only the device which issues the present synchronization request is allowed to synchronize the added data. It is without doubt that a user may also set on the portal side the specific devices which may share the added data.

In order to satisfy different operation requirements on the changed data, in this preferred embodiment, the cloud server first acquires an operation type of the changed data, and operates on the changed data according to the operation type, for example, the operation type can be adding, deleting and modifying, so as to realize that the changed data is synchronized to the cloud server through different operations. When the operation type is adding, the cloud server adds the changed data into the cloud server, and sets the record operation time of the changed data which is added to be the time of the add operation currently performed; when the operation type is deleting or modifying, the cloud server detects whether a data attribute which is corresponding to the changed data and is recorded by the cloud server is shared or not, so as to detect whether the mobile terminal has the right to perform a delete or modify operation on the changed data; if the detecting result is yes, then the corresponding data in the cloud server is deleted or modified and the record operation time of the data is updated to be the time of the delete operation or modify operation currently performed.

In order to ensure the stability of the system, when the cloud server and the mobile terminal simultaneously initiate synchronization on the data to be synchronized: when the operation type is deleting or modifying, and the mobile terminal and the cloud server portal simultaneously issue a deletion or modification request to the changed data, the cloud server performs a corresponding operation on the changed data according to a priority order of the mobile terminal and the cloud server portal. For example, when mobile terminal A requests to perform a delete operation on record ss, while the cloud server portal requests to perform a modify operation on record ss, a corresponding operation is performed according to the order of whether the priority of mobile terminal A is higher or the priority of the cloud server portal is higher, which is set by the user, and if the priority of mobile terminal A is higher, then record ss is deleted from the cloud server, and if the priority of the cloud server portal is higher, then the ss record modified by the cloud server is returned to the terminal for synchronization. It is without doubt that "simultaneously" here refers to the same second as the current time, because time is only accurate to the second level, and the mobile terminal and the cloud server portal may have initiated synchronization of the same data in one second.

In order to further ensure the stability of the system, the cloud server synchronizes with the plurality of mobile terminals in sequence when a plurality of mobile terminals initiate synchronization on the data to be synchronized. For example, when mobile terminal A requests to perform a delete operation on record ss, mobile terminal B requests to perform a modify operation on record ss, and when the SynIds (equivalent to the last time that the data was synchronized by the mobile terminal) saved by the A and B currently are the same, that is, the data states of A and B after the latest synchronization are consistent, and then mobile terminal A and mobile terminal B initiate synchronization with the cloud server concurrently, the cloud server performs a serial operation on data ss, that is, performing corresponding operations on data ss in sequence according to the operation requests of mobile terminal A and mobile terminal B, thus ensuring the system stability. It is without doubt that "simultaneously" here refers to the same second as the current time, and because time is only accurate to the second level, and a plurality of mobile terminals may have initiated synchronization of the same data in one second, the way of local time+calculator is adopted to distinguish the order for each mobile terminal to issue a request, that is, the local time plus the count of the calculator. For example, the time for a first terminal which requests synchronization to issue a request in the current time is the current time+1, the time for a second terminal which requests synchronization to issue a request in the current time is the current time+2, and the like, so as to distinguish between the plurality of terminals simultaneously issuing requests in sequence in one second.

In order to save the memory space of the server, the backend of the cloud server may clean up relevant information about an invalid device via a cleaning thread, for example, the cloud server checks whether the interval between the device_timestamp (equivalent to the last time that the mobile terminal synchronizes data with the cloud server) of each device in each account and the current time exceeds the expiretime (equivalent to a preset time interval) or not, and if yes, the device fails to be synchronized in the account, and the cleaning thread may delete relevant information about the device on the cloud server.

Detailed description is made below on each of the above-mentioned preferred embodiments in conjunction with accompanying drawings and instances.

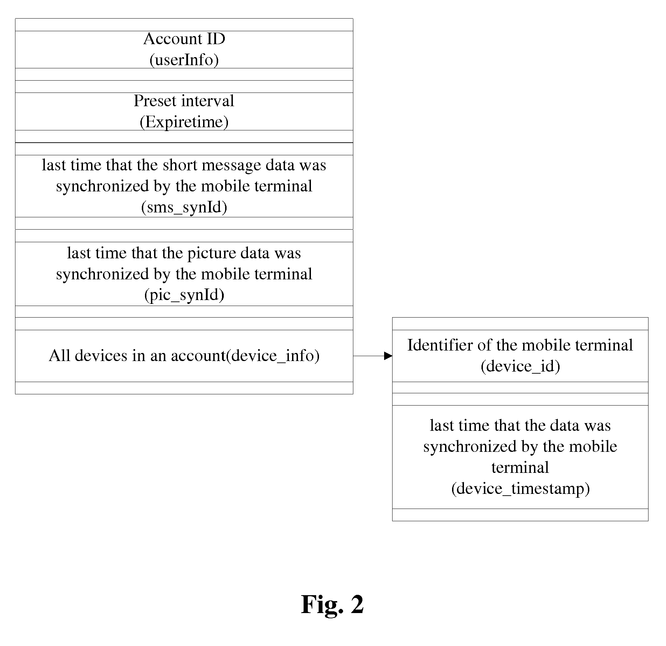

In order to facilitate the realization of the above-mentioned data synchronization method, the control in the form of tables may be adopted, for example, a synchronous control data table and a service data table of each service may be established on the server side. Take synchronizing sms and picture for example, as shown in Fig. 2, the synchronous control data table may, but is not limited to, include the following information: userInfo field: account ID (equivalent to a synchronization account).
expiretime field (equivalent to a preset time interval): account expiration time. When the interval that a certain device has not been synchronized for a long time in the above-mentioned account exceeds the time of the expiretime field, then the device fails to be synchronized in the account, and in order to save the memory space of the server, relevant data of the device is cleaned up. When the failed device initiates synchronization to the server again via the above-mentioned account, it is required to re-synchronize the full records of all services.
sms_synId (equivalent to the last time that the mobile terminal synchronized short message data with the cloud server): synchronization ID of the latest operation of the short message service.
pic_SynId (equivalent to the last time that the mobile terminal synchronized picture data with the cloud server): synchronization ID of the latest operation of the picture service.

Preferably, it is possible to extend the XX_synId field (equivalent to the last time that the mobile terminal synchronized data with the cloud server) according to actual services, for example, for the contact service, the field is contact_SynId. The above-mentioned synchronization ID (equivalent to the last time that the mobile terminal synchronized data) is comprised of: time+calculator, where time is the time when the current synchronization operation is performed. Because time is only accurate to the second level, and a plurality of mobile terminals may have initiated synchronization of the same data in one second, the way of local time+calculator is adopted to distinguish the order for each mobile terminal to issue a request, that is, the local time plus the count of the calculator. For example, the CurrentSynId of a first terminal which requests synchronization in the current time is the current time+1, the CurrentSynId of a second terminal which requests synchronization in the current time is the current time+2, and the like, so as to distinguish between the plurality of terminals simultaneously issuing synchronization requests in sequence in one second.

device_info: recording all the devices synchronized in an account. The device_info (devices in the same account) field contains: a device_id field (equivalent to an identifier of the mobile terminal) and a device_timestamp field (equivalent to the last time that the mobile terminal synchronized data), wherein the device_id field is the device identifier and if the mobile terminal is a mobile phone, the device_id field may be an IMEI number; and the device_timestamp field is the time stamp of the latest synchronization of the device.

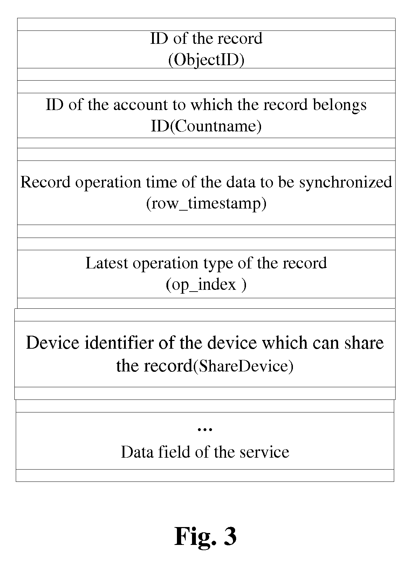

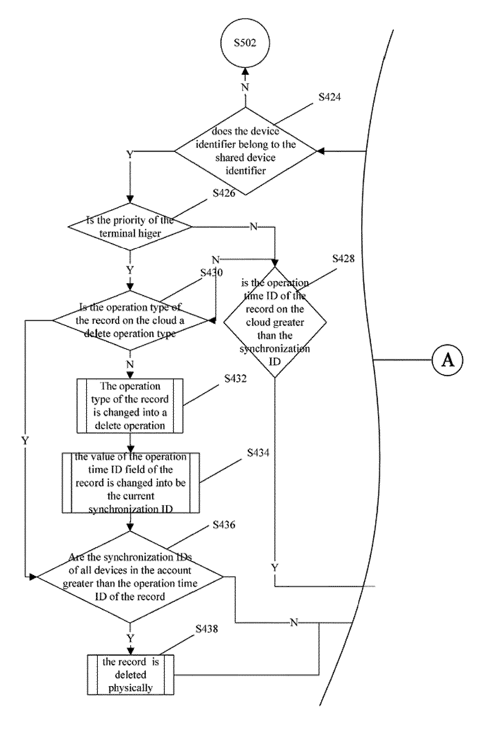

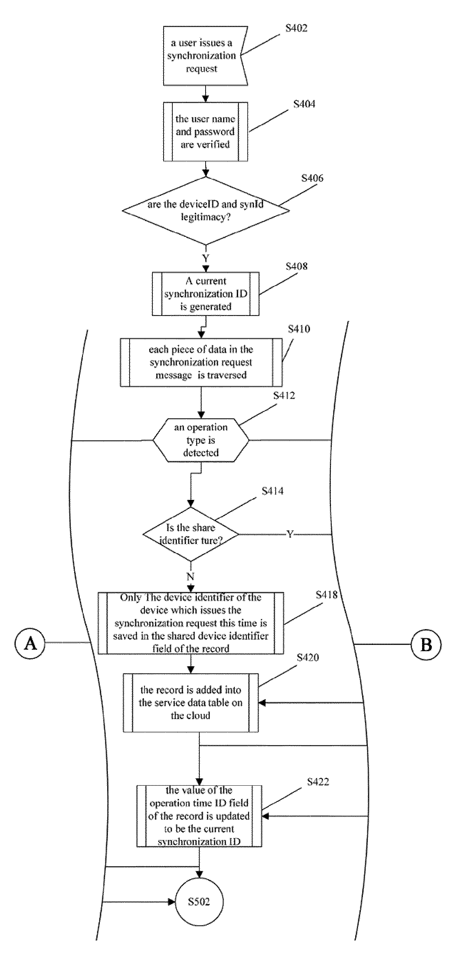

Each service has at least one service data table, as shown in Fig. 3. A service data table includes but is not limited to the following information:
ObjectID: ID of each record (data to be synchronized).
Countname: ID of the account to which the record belongs.
row_timestamp (equivalent to the record operation time of the data to be synchronized): latest modification time of the record.
op_index: latest operation type of the record, which may be divided into '0'-add (adding), '1'-change (modifying), and '2'-delete (deleting).
ShareDevice: saving a device identifier of the device which may share the record.

It is without doubt that the above-mentioned service data table is just a preferred instance, and the present invention is not limited thereto. The specific data recorded in the above-mentioned service data table may also extend other fields in the table.

During the synchronization which is performed via the above-mentioned synchronous control data table and service data table of each service, the following operations may be performed: first, generating a currentSynId according to the current time+calculator; in the process of synchronization, first performing the request for changing the data sent by a mobile phone side, and updating the changed data into the service data table on the cloud; at the same time, updating the row_timestamp in the service data table to be the value of the currentSynId. If the operation type of the changed data is adding, and the share attribute of the added data is true, then sharing is permitted, and the cloud saves all the device_ids in the device_info in the synchronous control data table into the ShareDevice in the service data table, that is to say, the record may be shared by all the devices in the account; and if the share attribute is false, then sharing is not permitted, and the ShareDevice in the service data table only saves the deviceID of the device which has issued the present synchronization request. If the operation type of the data is modifying or deleting, the deviceID of the device issuing the present synchronization request will be matched with the deviceIDs in the ShareDevice; if the match fails, it indicates that the terminal device does not have the right to update this data record, and will return the changed data on the cloud side to the terminal after the changed data requested by the terminal is updated to the cloud, wherein when the synId carried in the synchronization request message is smaller than the xx_synId field, it indicates that the data on the server has changed with respect to the service data in the account of the device, and at this moment the changed data on the cloud server side needs to be sent to the device. All records in the service data table are traversed, and records of which the synId is smaller than the row_timestamp and the deviceID matches to the ShareDevice are fetched, wherein special processing is performed on the records of which the numerical value of the row_timestamp equals to the value of the currentSynId, that is, the records of which the synId is smaller than row_timestamp and the deviceID matches to the ShareDevice are sent to the device; if both the cloud portal and the mobile phone side modify a non-unique field simultaneously, an extended field is added, that is, the field modified by the cloud portal and the mobile phone side is updated into the service data table on the cloud; if both the cloud portal and the mobile phone side modify a unique field simultaneously, it is possible to determine whether to cover the record modified by the cloud portal with the data modified by the mobile phone side according to the priority of the cloud portal and the mobile phone side set by the user, and then return the changed data and the currentSynId to the mobile phone side, and the mobile phone side will continue to use this currentSynId numerical value when issuing a synchronization request next time and take the currentSynId numerical value as the SynId and send same to the server.

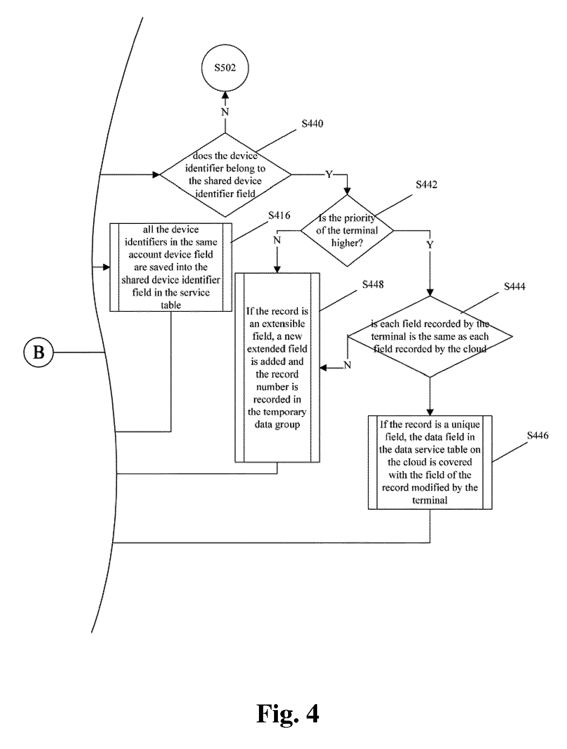

Detailed description will be made below on the above-mentioned data synchronization method in conjunction with accompanying drawings, wherein a contact service data table of a mobile phone side is taken as the service data table, as shown in Fig. 4. The method for synchronizing data comprises step S402 to step S448.

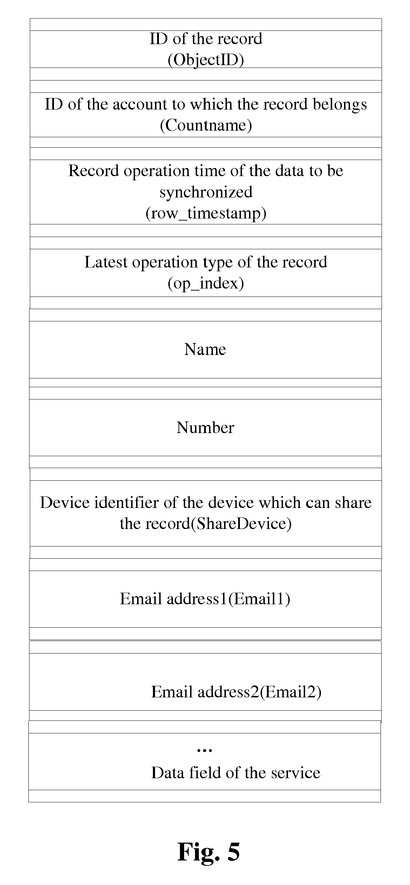

Step S402: when a user issues a synchronization request, a synchronization request message is sent to the cloud, the synchronization request message carrying changed data on a mobile phone side (all data on the terminal side is sent to the cloud during the first synchronization, and only the changed data on the terminal side is sent to the cloud during non-first synchronization), an operation type of the data, SynId, deviceID, account and password. If the device is synchronized for the first time, then SynId is 0, and if the device is not synchronized for the first time, then the SynId of the latest synchronization will be sent to the server. The server side is configured with a synchronous control data table and a contact service data table. The service data table, as shown in Fig. 5, comprises ObjectID, Countname, row_timestamp, op_index, contact name, contact number, ShareDevice, and contact Email (email address), and other fields, and when the data table is set up for the first time, there is not any data in the service data table initially.

Step S404: after the cloud server receives the synchronization request message, the user name and password are verified.

Step S406: after the user name and password passed the verification, the legitimacy of the deviceID and synId is verified. If they are legitimate, turn to step S408, and if not, feeding back the message that the synchronization request is invalid to the terminal, wherein the method for verifying deviceID and synId is as follows: the deviceID is matched with the deviceIDs in the device_info in the account. If the match succeeds, it indicates that the device is legitimate, and when the synId carried in the synchronization request message is smaller than or equal to the XX_synId field, the requested synId is legitimate.

Step S408: a currentSynId (current synchronization ID) is generated, and the policy for generating the currentSynId is: local time+calculator, that is, the local time plus the count of the calculator, for example, the currentSynId of a first terminal which requests to synchronize in the current time is the current time+1, and the currentSynId of a second terminal which requests to synchronize in the current time is the current time+2, and the like, so as to distinguish between a plurality of terminals simultaneously issuing synchronization requests in sequence in one second.

Step S410: each piece of record data carried in the synchronization request message sent by the terminal is traversed.

Step S412: an operation type corresponding to each piece of record data is detected. If the operation type is adding, turn to step S414, if the operation type is deleting, turn to step S424, and if the operation type is modifying, turn to step S440.

Step S414: if the operation type corresponding to the data is an add operation, it is detected whether the "share" (share identifier) carried in the synchronization request message is true or not, if it is true, turn to step S416, and if the "share" is not true, that is, the "share" is false, turn to step S418.

Step S416: if the "share" is true, all the device_ids in the device_info are saved into the ShareDevice of the record in the service data table, that is, allowing all the terminals in the account to share the record data.

Step S418: if the "share" is false, it indicates that the record data is not shared, and the ShareDevice (shared device identifier field) of the record in the service data table only saves the deviceID of the device issuing the present synchronization request, that is, only allowing the device to synchronize the record data.

Step S420: the record data is added into the service data table on the cloud.

Step S422: the row_timestamp (operation time ID field) of the record data in the service data table is set to be the value of the currentSynId, and step S602 is performed.

Step S424: if the operation type corresponding to the data is a delete operation, it is detected whether the ShareDevice of the record in the service data table on the cloud contains the deviceID of the device issuing the present synchronization request. If no, the device does not have the right to delete the record data and will not perform any operation on the record, and the flow goes to step S602; if yes, it indicates that the device has the right to delete the record data, and the flow goes to step S426.

Step S426: it is detected whether the priorities of the terminal and the cloud portal set by the user are that the priority of the terminal is higher than that of the cloud portal, if yes, turn to step S430, and if no, turn to step S428.

Step S428: it is detected whether the row_timeStamp of the record data in the service data table on the cloud is greater than the SynId, if yes, turn to step S602, and if no, turn to step S430.

Step S430: it is detected whether the operation type of the record in the service data table on the cloud is a delete operation type, if yes, turn to step S436, and if no, turn to step S432.

Step S432: The operation type of the record in the service data table on the cloud is changed into a delete operation.

Step S434: the numerical value of the row_timestamp field of the record in the service data table on the cloud is updated to be the currentSynId.

Step S436: it is detected whether the device_timestamps (synchronization IDs) of all devices in the account are greater than the row_timestamp of the delete record or not, (being greater means that all devices have synchronized the record already), and if yes, turn to step S438, and if no, the record data is not deleted temporarily and step S602 is performed.

Step S438: the record data is deleted physically.

Step S440: if the operation type corresponding to the data is a modify operation, it is detected whether the ShareDevice of the record in the service data table on the cloud contains the deviceID of the device issuing the present synchronization request. If no, the device does not have the right to modify the record data and will not perform any operation on the record, and the flow goes to step S602; if yes, it indicates that the device has the right to modify the record data, and the flow goes to step S442.

Step S442: it is detected whether the priorities of the terminal and the cloud portal set by the user are that the priority of the terminal is higher than that of the cloud portal, if yes, turn to step S444, and if no, turn to step S448.

Step S444: it is detected whether each field recorded by the terminal is the same as each field recorded by the cloud, and whether the record data is the record of a unique field, if yes, turn to step S446, and if no, turn to step S448.

Step S446: if the record data is a unique field, the record modified by the cloud is covered with the data modified by the terminal, and Step S422 will be performed.

Step S448: if the record data is a non-unique field, an extended field is added, that is, the field modified by the cloud and the terminal is updated into the service data table on the cloud, and at the same time the record data is recorded in a temporary data group temp_recoder, and step S422 will be performed.

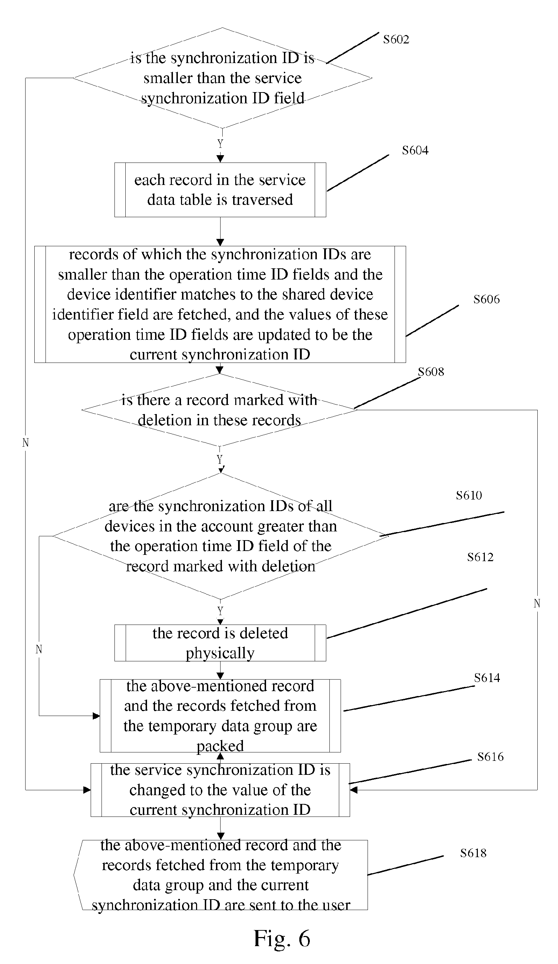

In the above-mentioned flow, after turning to step S602, the flow as shown in Fig. 6 will be performed to return the changed data on the cloud side to the terminal, so as to complete the data synchronization. As shown in Fig. 6, the flow comprises step S602 to step S618.

Step S602: it is detected whether the SynId carried in the synchronization request message is smaller than the contactsynId (i.e., service ID, xx_synId field) in the account. If no, it indicates that there is no changed data on the cloud server side, and the flow goes to step S616; if yes, the flow goes to step S604.

Step S604: every record in the service data table is traversed.

Step S606: records of which the synId is smaller than the row_timestamp and the deviceID matches to the ShareDevices are fetched, and the numerical values of the row_timestamp field of the records in the service data table on the cloud are updated to be the currentSynId.

Step S608: it is detected whether the fetched records contained a record of which the operation type is a delete operation, if yes, turn to step S610, and if no, turn to step S616.

Step S610: if there is a record of which the operation type is a delete operation, it is determined whether the device_timestamps of all devices in the account are greater than the row_timestamp of the record, if yes, turn to step S612, and if no, turn to step S614.

Step S612: the record is deleted physically.

Step S614: the above-mentioned fetched records together with the record data recorded in the temporary data group temp_recoder are packed.

Step S616: the contact_synId field in the account is updated with the numerical value of the currentSynId.

Step S618: finally, the above-mentioned fetched records and the records in the temp_recoder are packed, wherein the packet carries the numerical value of the contact_SynId. The packet is sent to the terminal, so as to complete the data synchronization.

After the above-mentioned flow, in order to save the memory space of the server, the backend of the cloud server may clean up relevant information about an invalid device via a cleaning thread, check whether the interval between device_timestamp of each device in each account and the current time exceeds the expiretime or not, and if yes, the device fails to be synchronized in the account, and the cleaning thread may delete relevant information about the device.

### Embodiment 2

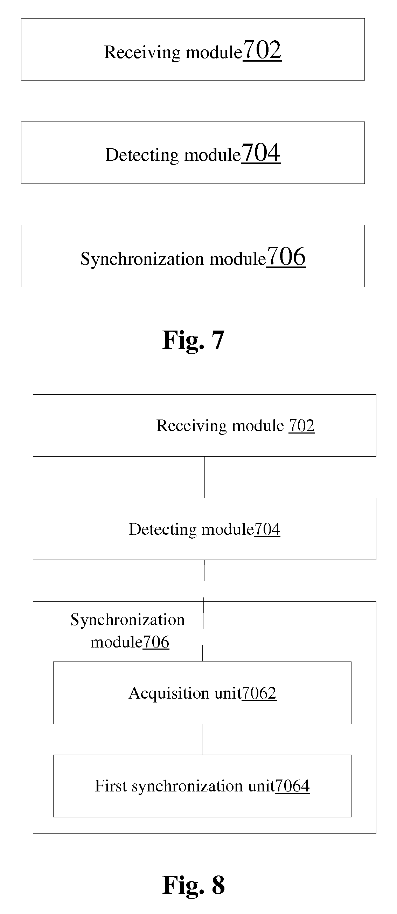

The embodiments of the present invention provide a preferred device for synchronizing data, as shown in Fig. 7. The device for synchronizing data comprises: a receiving module 702 configured to receive a data synchronization request sent by a mobile terminal, wherein the synchronization request carries an identifier of the mobile terminal, last time that data was synchronized by the mobile terminal, and a synchronization account for synchronizing data between the mobile terminal and the cloud server; a detecting module 704 connected to the receiving module 702 and configured to detect that record operation time of data to be synchronized is greater than the last time that the data was synchronized by the mobile terminal, wherein the data to be synchronized is data which is corresponding to the identifier in the synchronization account and is on the cloud server; and a synchronization module 706 connected to the detecting module 704 and configured to synchronize the data to be synchronized with the mobile terminal.

In the above-mentioned embodiment, the receiving module 702 receives the data synchronization request sent by the mobile terminal, wherein the synchronization request carries the identifier of the mobile terminal, the last time that the data was synchronized by the mobile terminal, and the synchronization account for synchronizing data between the mobile terminal and the cloud server, so as to ensure that the mobile terminal is a terminal in the account; the detecting module 704 determines that the changed data on the cloud server is the data to be synchronized by detecting that the record operation time of the data to be synchronized is greater than the last time that the data was synchronized by the mobile terminal; and at the same time, the data to be synchronized is the data corresponding to the identifier of the mobile terminal in the synchronization account on the cloud server, that is, the data to be synchronized only allows the mobile terminal with the identifier corresponding thereto to synchronize the data to be synchronized, which solves the problems that traffic transmitted during data synchronization is increased and resource consumption on the cloud is also increased, which are caused by data synchronization of a plurality of mobile terminals in the same account, thereby reducing the transmitted traffic caused by data synchronization, reducing the resource consumption of the cloud server, and facilitating the satisfaction of diversified requirements of a user.

In order to correctly send the data to be synchronized to the mobile terminal, the above-mentioned detecting module 704 is further configured to detect that the record operation time of the data to be synchronized corresponding to a predetermined service is greater than the last time when that the data was synchronized by the mobile terminal, so as to distinguish the changed data on the cloud server with respect to the data on the mobile terminal, and send the data to be synchronized of the predetermined service to the mobile terminal via the synchronization module 706, so as to ensure that the data to be synchronized which is sent to the mobile terminal is the changed data on the cloud server with respect to the data on the mobile terminal.

In order to realize bidirectional data synchronization between the cloud server and the mobile terminal, the receiving module 702 is further configured to receive a data synchronization request sent by the mobile terminal, wherein the request comprises changed data of the mobile terminal and attribute information about the changed data, wherein the attribute information comprises: being shared or being exclusive. In this preferred embodiment, the mobile terminal sends the changed data thereof to the cloud server via the data synchronization request, and carries the attribute information about the changed data, for example, whether the changed data is shared data or not, that is, whether the changed data may allow all the mobile terminals in the above-mentioned synchronization account to perform synchronization thereon, so as to realize that the synchronization data may be synchronized by some of the mobile terminals in the synchronization account.

Every time a device synchronizes data with the cloud, only the changed data content of the device and/or the cloud side is synchronized, and the synchronization request message sent by the device every time carries the following contents: a device ID, an account, a password, an synId, changed data on the device side, and a data operation type, wherein when the changed data is added data, the above-mentioned synchronization request message also carries an identifier "share" so as to identify whether it is allowed to share the added data or not, and if it is allowed to share the added data, then the cloud server may by default share the data with all the devices in the account, and if it is not allowed to share the added data, then only the device which issues the present synchronization request is allowed to synchronize the added data. It is without doubt that the user may also set on the portal side the specific devices which may share the added data.

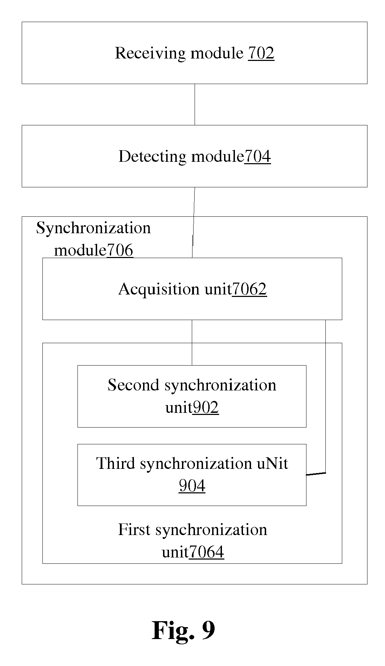

In order to satisfy different operation requirements on the changed data, as shown in Fig. 8, the synchronization module 706 comprises: an acquisition unit 7062 configured to acquire an operation type of the changed data; and a first synchronization unit 7064 connected to the acquisition unit 7062 and configured to operate on the changed data according to the operation type. For example, the operation type may be adding, deleting and modifying, so as to realize that the changed data is synchronized to the cloud server through different operations. Therefore, as shown in Fig. 9, the above-mentioned first synchronization unit 7064 also comprises: a second synchronization unit 902 connected to the acquisition unit 7062 and configured to add the changed data into the cloud server when the operation type is adding, and to set the record operation time of the changed data which is added to be the time of the add operation; and third synchronization unit 904 connected to the acquisition unit 7062 and configured to detect whether a data attribute corresponding to the changed data recorded by the cloud server is shared or not when the operation type is deleting or modifying, and if a detecting result is yes, then delete or modify the corresponding data on the cloud server and update the record operation time of the data to be the time of the delete operation or modify operation.

In order to ensure the stability of the system, when the cloud server and the mobile terminal simultaneously initiate synchronization on the data to be synchronized: when the operation type is deleting or modifying, and the mobile terminal and the cloud server portal simultaneously issue a deletion or modification request to the changed data, the synchronization unit 7064 is also configured to perform a corresponding operation on the changed data according to a priority order of the mobile terminal and the cloud server portal. For example, when mobile terminal A requests to perform a delete operation on record ss, while the cloud server portal requests to perform a modify operation on record ss, a corresponding operation is performed according to the order of whether the priority of mobile terminal A is higher or the priority of the cloud server portal is higher, which is set by the user, and if the priority of mobile terminal A is higher, then the ss record is deleted from the cloud server, and if the priority of the cloud server portal is higher, then the ss record modified by the cloud server is returned to the terminal for

synchronization. It is without doubt that "simultaneously" here refers to the same second as the current time, because time is only accurate to the second level, and the mobile terminal and the cloud server portal may have initiated synchronization of the same data in one second.

In order to further ensure the stability of the system, when a plurality of mobile terminals simultaneously initiate synchronization on the data to be synchronized, the synchronization unit 7064 is also configured to synchronize the plurality of mobile terminals in sequence. For example, when mobile terminal A requests to perform a delete operation on record ss, mobile terminal B requests to perform a modify operation on record ss, and the current SynIds (equivalent to the last time that the data was synchronized by the mobile terminal) saved by A and B are the same, that is, the data states of A and B after the latest synchronization are consistent, and then mobile terminal A and mobile terminal B initiate synchronization on the cloud server concurrently, the cloud server performs a serial operation on data ss, that is, performing corresponding operations on data ss in sequence according to the operation requests of mobile terminal A and mobile terminal B, thereby ensuring the system stability. It is without doubt that "simultaneously" here refers to the same second as the current time, and because time is only accurate to the second level, and a plurality of mobile terminals may have initiated synchronization of the same data in one second, the way of local time+calculator is adopted to distinguish the order for each mobile terminal to issue a request, that is, the local time plus the count of the calculator. For example, the time for a first terminal which requests synchronization to issue a request in the current time is the current time+1, the time for a second terminal which requests synchronization to issue a request in the current time is the current time+2, and the like, so as to distinguish between the plurality of terminals simultaneously issuing requests in sequence in one second.

In order to save the memory space of the server, the above-mentioned data synchronization device also comprises a cleaning module configured to clean up relevant information about an invalid device, for example, the cloud server regularly checks whether the interval between the device_timestamp (equivalent to the last time that the data was synchronized between the mobile terminal and the cloud server) of all devices in each account and the current time exceeds the expiretime (equivalent to a preset time interval) or not, and if yes, the device fails to be synchronized in the account, and a cleaning thread may delete relevant information about the device on the cloud server.

Apparently, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention.

## Claims

1. A method for synchronizing data, **characterized by** comprising:
a cloud server receiving a data synchronization request sent by a mobile terminal, wherein the synchronization request carries an identifier of the mobile terminal, last time that data was synchronized by the mobile terminal, and a synchronization account for synchronizing data between the mobile terminal and the cloud server;
the cloud server detecting that record operation time of data to be synchronized is greater than the last time that the data was synchronized by the mobile terminal, wherein the data to be synchronized is data which is corresponding to the identifier in the synchronization account and is on the cloud server; and
the cloud server synchronizing the data to be synchronized with the mobile terminal.

2. The method according to claim 1, **characterized in that**
the cloud server detecting that the record operation time of the data to be synchronized is greater than the last time that the data was synchronized by the mobile terminal comprises: the cloud server detecting that the record operation time of the data to be synchronized corresponding to a predetermined service is greater than the last time that the data was synchronized by the mobile terminal; and
the cloud server synchronizing the data to be synchronized with the mobile terminal comprises: the cloud server sending the data to be synchronized of the predetermined service to the mobile terminal.

3. The method according to claim 1, **characterized in that** the cloud server receiving the data synchronization request sent by the mobile terminal comprises:
the data synchronization request sent by the mobile terminal and received by the cloud server comprising changed data of the mobile terminal and attribute information about the changed data, wherein the attribute information comprises: being shared or being exclusive.

4. The method according to claim 3, **characterized in that** the cloud server synchronizing the data to be synchronized with the mobile terminal comprises:
the cloud server acquiring an operation type of the changed data, and operating on the changed data according to the operation type.

5. The method according to claim 4, **characterized in that** the cloud server operating on the changed data according to the operation type comprises:
when the operation type is adding, the cloud server adding the changed data into the cloud server and setting the record operation time of the changed data which is added to be time of the add operation; and
when the operation type is deleting or modifying, the cloud server detecting whether a data attribute which is corresponding to the changed data and is recorded by the cloud server is shared or not, and if a detecting result is yes, then deleting or modifying corresponding data in the cloud server and updating the record operation time of the data to be time of the delete operation or modify operation.

6. The method according to any one of claims 1 to 5, **characterized in that** the cloud server synchronizing the data to be synchronized with the mobile terminal comprises:
when the operation type is deleting or modifying, and the mobile terminal and a cloud server portal simultaneously issue a deletion or modification request for the changed data, the cloud server performing a corresponding operation on the changed data according to a priority order of the mobile terminal and the cloud server portal.

7. The method according to any one of claims 1 to 5, **characterized in that** the cloud server synchronizing the data to be synchronized with the mobile terminal comprises:
when a plurality of mobile terminals simultaneously initiate synchronization on the data to be synchronized, the cloud server synchronizing the data to be synchronized with the plurality of mobile terminals in sequence.

8. The method according to any one of claims 1 to 5, **characterized in that** after the cloud server synchronizing the data to be synchronized with the mobile terminal, the method further comprises:
when the cloud server detects that a time interval between the last time that the mobile terminal synchronizes the data with the cloud server and the current time is greater than a preset time interval, deleting all data of the mobile terminal on the cloud server.

9. A device for synchronizing data, **characterized by** comprising:
a receiving module configured to receive a data synchronization request sent by a mobile terminal, wherein the synchronization request carries an identifier of the mobile terminal, last time that the data was synchronized by the mobile terminal, and a synchronization account for synchronizing data between the mobile terminal and the cloud server;
a detecting module configured to detect that record operation time of data to be synchronized is greater than the last time that the data was synchronized by the mobile terminal, wherein the data to be synchronized is data which is corresponding to the identifier in the synchronization account and is on the cloud server; and
a synchronization module configured to synchronize the data to be synchronized with the mobile terminal.

10. The device according to claim 9, **characterized in that** the receiving module is further configured to receive the data synchronization request sent by the mobile terminal which comprises changed data of the mobile terminal and attribute information about the changed data, wherein the attribute information comprises: being shared or being exclusive.

11. The device according to claim 10, **characterized in that** the synchronization module comprises:
an acquisition unit configured to acquire an operation type of the changed data; and
a first synchronization unit configured to operate on the changed data according to the operation type.

12. The device according to claim 11, **characterized in that** the first synchronization unit comprises:
a second synchronization unit configured to add the changed data into the cloud server and set the record operation time of the changed data which is added to be time of the add operation when the operation type is adding; and
a third synchronization unit configured to detect whether a data attribute which is corresponding to the changed data and is recorded by the cloud server is shared or not when the operation type is deleting or modifying, and if a detecting result is yes, then delete or modify the corresponding data in the cloud server and update the record operation time of the data to be the time of the delete operation or modify operation.
